# EUROPEAN PATENT APPLICATION

(11) **EP 4 819 043 A1**
(43) Date of publication of application: **07.10.2026**
(21) Application number: 25168706.7
(22) Date of filing: 04.04.2025
(51) Int. Cl.: G06T 7/33

(54) **SYSTEM AND METHOD FOR MULTI-VIEW X-RAY/CT REGISTRATION**

(71) Applicant: Universität Zürich, 8006 Zürich (CH)
(72) Inventor: Calvet, Lilian, 8008 Zurich (CH); Flepp, Roman, 8008 Zurich (CH); Dreher, Thomas, 8008 Zurich (CH); Fürnstahl, Philipp, 8008 Zurich (CH); Sigrist, Bastian, 8008 Zurich (CH)
(74) Representative: Fleuchaus & Gallo Partnerschaft mbB

(57) **Abstract**

System (100), method and computer program product for multi-view image registration between X-ray images and CT scans. A 3D sliced CT model (10) representing a preoperative anatomical structure of a patient is received, which comprises a 3D mesh with edges and vertices defining surfaces (10-c1, 10-c2, 10-c3) of a plurality of anatomical sub-structures (10-1, 10-2, 10-3) of said anatomical structure. Co-calibrated 2D X-ray images (20-1, 20-2) of said anatomical structure obtained under different viewing angles are received. In each X-ray image (20-1p, 20-2p), sub-structure contours (20-1c1, 20-1c2, 20-1c3, 20-2c1, 20-2c2, 20-2c3) of respective anatomical sub-structures are extracted using a semantic contour segmentation method. Iterative contour-based ICP optimization is applied to contours of the reprojected sliced CT model and the extracted sub-structure contours until a convergence criterion (C1) is fulfilled, by computing, at each iteration, a transformation minimizing the sum of reprojection errors between extracted sub-structure contour points and a closest imaged vertex on the contours of the reprojected sliced CT model, and updating 2D-X-ray to 3D-CT correspondences for each anatomical sub-structure, resulting in a registered CT model (10r).

## Description

### Technical Field

The present invention generally relates to the field of image processing, and in particular relates to registering X-ray images with its associated CT scans.

### Background

X-Ray/CT registration is a fundamental task in medical image analysis, with applications in surgical planning and navigation. Accurate X-ray/CT registration enables precise localization of anatomical structures and surgical instruments. However, existing methods often face challenges in terms of accuracy and robustness, particularly in complex clinical scenarios. Prior art methods for X-ray/CT registration include intensity-based, feature-based and self-supervised machine-learning-based methods. Different prior proposed methods as well as a state-of-the-art commercial solution need manual landmark annotation, slowing down the surgical procedure. Optimization-based techniques, such as intensity-based registration algorithms, require an initial transformation estimate close to the optimal solution to avoid convergence to local minima. Studies demonstrate that even minor deviations from the true alignment can lead to registration failures, compromising their robustness (cf., Leskovar M, Heyland M, Trepczynski A, Zachow S. Comparison of global and local optimization methods for intensity-based 2D-3D registration. Comput Biol Med. 2025 Mar;186:109574. doi: 10.1016/j.compbiomed.2024.109574. Epub 2024 Dec 31. PMID: 39740510). Furthermore, the inherent limitations when creating digitally reconstructed radiographs (DRR), due to the difficulty of recreating real imaging artifacts present in real X-ray, limit the performance of intensity-based methods.

X-ray/CT registration methods generally fall into two categories: intensity-based and feature-based. Intensity-based methods optimize similarity between digitally reconstructed radiographs (DRR) and acquired X-ray images. Traditional optimization using non-differentiable DRR renderers are often computationally slow. Differentiable methods like DiffPose alleviate this issue (cf., Gopalakrishnan, V., Dey, N., Golland, P.: Intraoperative 2D/3D Image Registration via Differentiable X-ray Rendering (2024) https://arxiv.org/abs/2312.06358) by using a vectorized and GPU-accelerated version of Siddon's method. Nonetheless, these methods remain sensitive to initial conditions and inherently limited by their DRR generation method. Feature-based methods, use identifiable anatomical points, contours, or external markers to establish correspondences between the two imaging modalities. These methods are either manual or automated. The manual ones need a clinical expert to identify correspondences and hinder the clinical workflow. The automated ones can become unreliable due to ambiguity in landmark extraction or when too few landmarks are available. Contour-based methods, without strong semantic cues, poorly constrain the registration solution. This is primarily because similar contours can arise from different anatomy poses, leading to ambiguity.

### Summary

There is therefore a need for a method and system for X-Ray/CT registration in complex clinical scenarios with a high degree of accuracy and robustness. This problem is solved by the features of the independent claims by addressing the prior art limitations with a novel automatic multi-view image registration approach between X-ray images and CT scans leveraging anatomical sub-structures. In short, by extracting and segmenting the contours of distinct anatomical sub-structures (e.g., bone parts), including occluding contours, robust and precise landmarks are obtained. Once such contours are extracted, an iterative closest point (ICP) algorithm is applied to establish correspondence between reprojected contours from a segmented 3D CT model (e.g., sliced bone model) and the extracted contours from the X-ray images within the same class of substructure (e.g., classes for the "diaphysis", "medial condyle" and "lateral condyle" substructures of a "distal femur" bone). This iterative process aligns the contours until a satisfactory registration is achieved.

The herein disclosed method and system offers several advantages over prior art approaches. It is highly accurate, robust in optimization and artifacts, initialization-free and adaptable to a wide range of anatomical structures, including bones but also soft tissues of a living creature.

The herein disclosed multi-view X-ray/CT registration approach is an advancement in the field of medical image analysis. By combining robust contour identification and accurate registration techniques, the approach allows for improving the safety and efficacy of surgical procedures.

In one embodiment, a computer-implemented method is provided for multi-view image registration between X-ray images and CT scans. The CT scans represent a preoperative anatomical structure of a patient and are the basis for a 3D CT model of said anatomical structure. The CT model comprises a 3D mesh with edges and vertices defining surfaces (e.g., bone surfaces) of a plurality of anatomical sub-structures of said anatomical structure. For example, the anatomical structure may be a particular bone of the patient and the anatomical sub-structures correspond to certain parts of this particular bone. The method steps can be performed by an embodiment in the form of a corresponding computer system as described in the following.

The computer system, adapted to execute the computer-implemented method, initially receives the 3D sliced CT model via an appropriate data interface from a respective data source. The 3D sliced CT model defines a model that is segmented from the CT data and then sliced into its anatomical substructures. Further, the system receives at least two 2D X-ray images of said anatomical structure. The X-ray images are captured by one or more X-ray devices (e.g., C-Arm) defining the view-point of the herein disclosed registration method. The X-ray images are obtained under different viewing angles, and are co-calibrated. Various calibration methods may be used to obtain the intrinsic and extrinsic parameters of the X-ray system and co-calibrating the two or more X-ray images. In general, co-calibration of the two or more X-ray images means estimating the relative position and orientation of the two or more X-ray images and, optionally, the internal parameters of the imaging devices at the acquisition time. For example, calibration with a respective fiducial marker, landmark calibration, or deep-learning based calibration. A person skilled in the art may be aware of further suitable calibration methods. For example, the use of a fiducial marker allows to compute X-ray-to-fiducial marker transformation, which, once chained, delivers the relative pose between the X-ray images.

Typically, the sliced 3D CT model of the anatomical structure has been generated and received already before the 2D X-ray images are received.

The system further has a module adapted for semantic contour extraction which is used for semantic contour segmentation of the anatomical substructure contours in X-ray images. An example of how to accurately semantically segment thin tabular structures is described by Yannick Kirchhoff et al. in "Skeleton Recall Loss for Connectivity Conserving and Resource Efficient Segmentation of Thin Tubular Structures", https://arxiv.org/abs/2404.03010v2, 17 July 2024. This method for semantic contour extraction extracts, in each X-ray image, sub-structure contours of respective anatomical sub-structures as thin structures of just a few pixels thickness. In one embodiment, the segmentation neural network is enhanced with a thin structure preserving loss function, and is trained for thin structure segmentation. For example, the segmentation neural network can be implemented according to the nnU-Net framework, enhanced with Skeleton Recall Loss. nnU-Net is a deep learning-based segmentation method that automatically configures itself (cf., Isensee, F., Jaeger, P.F., Kohl, S.A.A. et al. nnU-Net: a self-configuring method for deep learning-based biomedical image segmentation. Nat Methods 18, 203-211 (2021). https://doi.org/10.1038/s41592-020-01008-z). A person skilled in the art may use other thin structure preserving loss functions, such as Recall Loss or Cross-Entropy Loss. When using the segmentation neural network for contour extraction, the extraction of such contours is often referred to as a prediction of the contours by the neural network.

An optimization module of the system is adapted to apply iterative contour-based ICP optimization to the contours of the reprojected sliced CT model and the sub-structure contours extracted in the X-ray images until a convergence criterion is fulfilled. Thereby, at each iteration, a transformation is computed minimizing the sum of reprojection errors between sub-structure contour points extracted in the X-ray images and a closest contour point of the reprojected sliced CT model, and 2D-X-ray to 3D-CT correspondences are updated for each anatomical sub-structure. The convergence criterion is fulfilled once there are no further correspondence changes anymore. The position and orientation of the sliced CT model at the end of the ICP optimization defines the registered CT model and the finished registration process.

In one embodiment, the method performs an optional reweighting step which may be performed by an optional weighting module of the computer system. Once the convergence criterion is fulfilled at the end of the ICP optimization, the weighting module may apply correspondence to the result of the optimization (i.e., all contour points after the optimization) by reweighting based on associated residuals to discard contour points associated with reprojection errors above a predefined threshold. Then, the optimization module repeats the ICP optimization step with the reweighted correspondences. A contour point receives a lower weight for the optimization if it is an outlier.

In one embodiment, a computer program product is provided having computer readable instructions which, when loaded into a memory of a computer system and executed by one or more processors of the computer system, cause the computer system to perform the steps of the computer-implemented method described above for multi-view image registration between X-ray images and CT scans. Once the computer system has loaded the computer program, the functional modules of the computer system for performing the respective method steps are instantiated when processing the respective computer-readable instructions at runtime.

In one embodiment, the computer program product can include further instructions to process X-ray images, wherein each X-ray image further includes a representation of a static K-wire (or more K-wires). The respective K-wire is rigidly connected with said anatomical structure and with a position and orientation indicator. The position and orientation indicator is rigidly connected with a calibration object used for co-calibrating the at least two two-dimensional X-ray images such that the position and orientation of the position and orientation indicator is known to the registered CT model. For example, the position and orientation indicator can be an electro-magnetic tracking system (EMT) sensor which is trackable with an EMT system, or it can be an optical indicator which is trackable with an optical tracking system.

The above-described computer system for multi-view image registration between X-ray images and CT scans can also be adapted for rendering an updated CT model in accordance with a respective tracked position indicating a move of the anatomical structure via said position and orientation indicator. In this embodiment, the system executes the computer program adapted for position tracking of the position and orientation indicator rigidly coupled with the anatomical structure (via K-wires). That is, the 2D-3D registration is performed after K-wires with a position and orientation indicator are attached to the anatomical structure. As a consequence, the position and orientation indicator is also registered with CT model and the X-ray images. As the position and orientation of the position and orientation indicator is known at any time (e.g., by using an EMT sensor which is trackable with an EMT system) and the position and orientation between the position and orientation indicator and the calibration objects is known, a tracking module of the computer system can track any motion of the underlying anatomical structure via the motion of the rigidly coupled position and orientation indicator within the coordinate system defined by the previous registering method. That is, the tracking module can render a corresponding updated CT model in accordance with the current position and orientation of the position and orientation indicator, thus providing precise current location and orientation information for the anatomical structure even after the anatomical structure has moved away from its original location which was used for registering the CT model with the X-ray images.

Further aspects of the invention will be realized and attained by means of the elements and combinations particularly depicted in the appended claims. It is to be understood that both the foregoing general description and the following detailed description are exemplary and explanatory only, and are not restrictive of the invention as described.

### Brief Description of the Drawings

FIG. 1A illustrates a block diagram of a computer system adapted for multi-view image registration between X-ray images and CT scans according to an embodiment;
FIG. 1B illustrates reprojection errors between extracted bone contour points and a closest imaged vertex on the contours of a CT model;
FIG. 2A is a flowchart of a computer-implemented method for multi-view image registration between X-ray images and CT scans according to an embodiment;
FIG. 2B illustrates functional blocks of a computer program product for multi-view image registration between X-ray images and CT scans according to an embodiment;
FIG. 3A shows a photo of a fiducial marker calibration objective attached to K-wires rigidly connected with an anatomic structure;
FIG. 3B is an X-ray image including a representation of the anatomical structure, representations of the K-wires and representations of reference points of the fiducial marker;
FIG. 3C illustrates registering a CT model with two X-ray images for an anatomical structure connected with K-wires and an EMT sensor as position and orientation indicator communicatively coupled with an EMT system;
FIG. 3D illustrates the use of a surgical tool which can be positioned in relation to the registered CT model by using the EMT system;
FIG. 4 shows examples of contour extraction for substructures of a femur according to an embodiment;
FIG. 5A illustrates a comparison of the registration accuracy for the claimed registration method and some prior art registration methods;
FIG. 5B illustrates the mean reprojection error mRPD for data points for a randomly initialized run according to an embodiment;
FIG. 5C illustrates the mean reprojection error mRPD for data points for an embodiment with restarting optimization for runs with a registration failure after applying a random perturbation;
FIG. 6 shows examples of contour extractions results of the claimed method in comparison with a prior art method; and
FIG. 7 is a diagram that shows an example of a generic computer device and a generic mobile computer device, which may be used in embodiments of the invention.

### Detailed Description

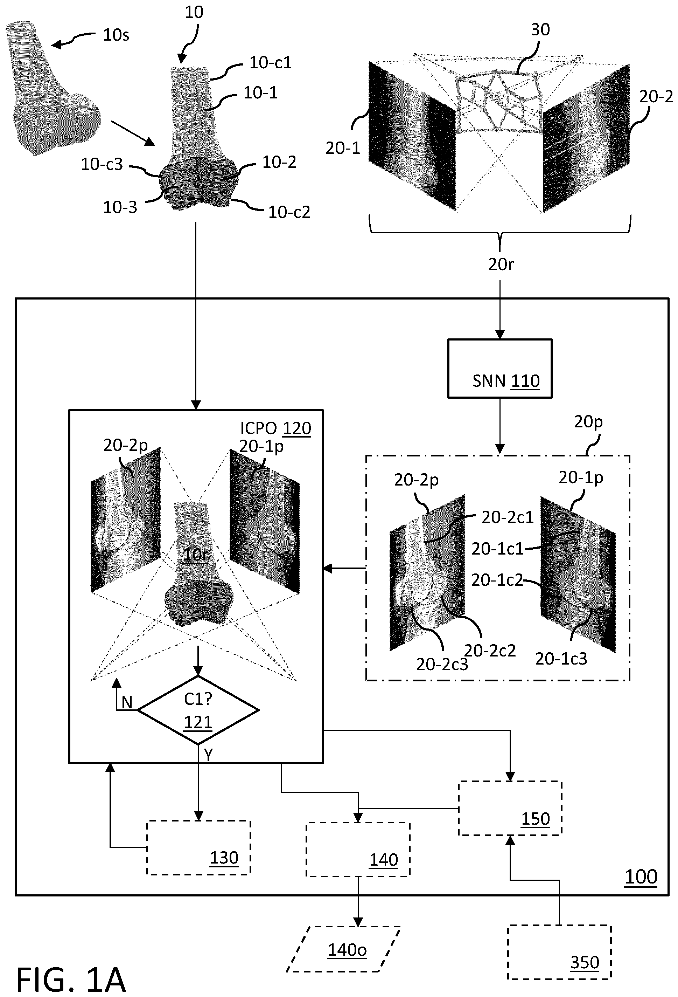

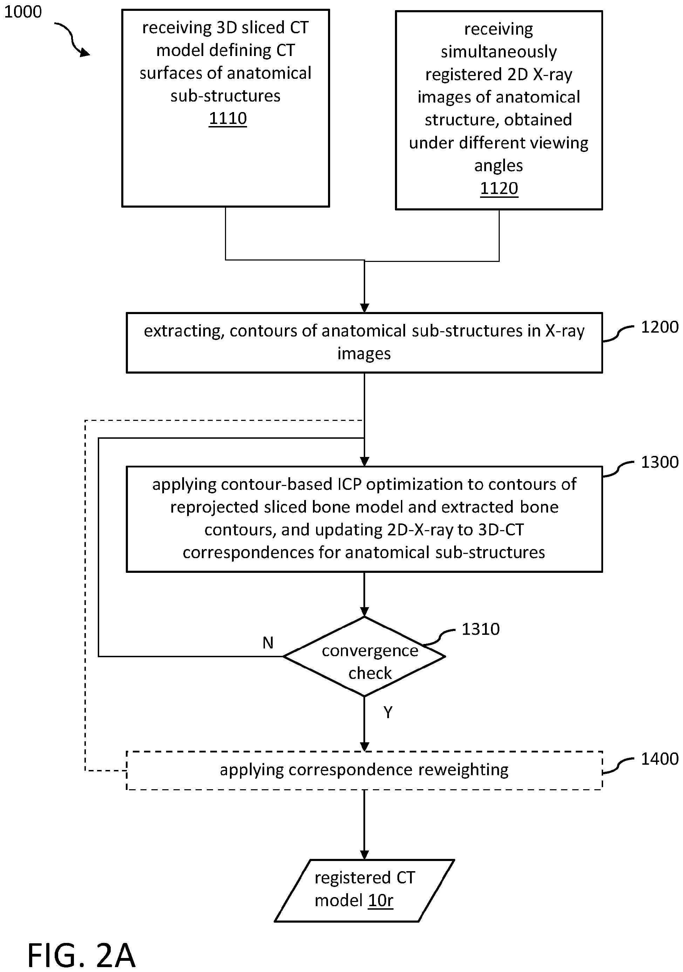

FIG. 1A illustrates a block diagram of a computer system 100 adapted for multi-view image registration between X-ray images 20-1, 20-2 and CT scan 10 according to an embodiment. System 100 is adapted to execute a computer-implemented method 1000 for multi-view image registration between X-ray images and CT scans as illustrated by the flowchart in FIG. 2A. FIG. 1A will therefore be described in view of the method 1000 in FIG. 2A.

The computer system 100 has a data interface (not shown) adapted to receive 1110 a 3D sliced CT model 10 representing a preoperative anatomical structure of a patient. The sliced CT model is obtained from said CT scans which are acquired from said anatomical structure of the patient. The sliced CT model comprises a 3D mesh with edges and vertices defining surfaces 10-c1, 10-c2, 10-c3 of a plurality of anatomical sub-structures 10-1, 10-2, 10-3 of the anatomical structure. FIG. 1A shows the 3D CT model 10 from two different viewing angles: on the right hand a frontal view, and on the left hand a perspective view. In the example, the anatomical structure represented by the CT model 10 is a bone (femur) of said patient. For example, the bone may be broken and needs to be rearranged in the patient's body to allow for a proper healing process. The anatomical sub-structures are characteristic elements of said bone like the femur diaphysis 10-1, and the medial and lateral condyles 10-2, 10-3. The characteristic contours of each substructure are illustrated by different line styles. For example, the diaphysis surfaces 10-c1 are drawn with a dash-dotted line, the surfaces 10-c2 of the medial 10-2 condyle are drawn with a dotted line, and the surfaces 10-c3 of the lateral condyle are drawn with a dashed line.

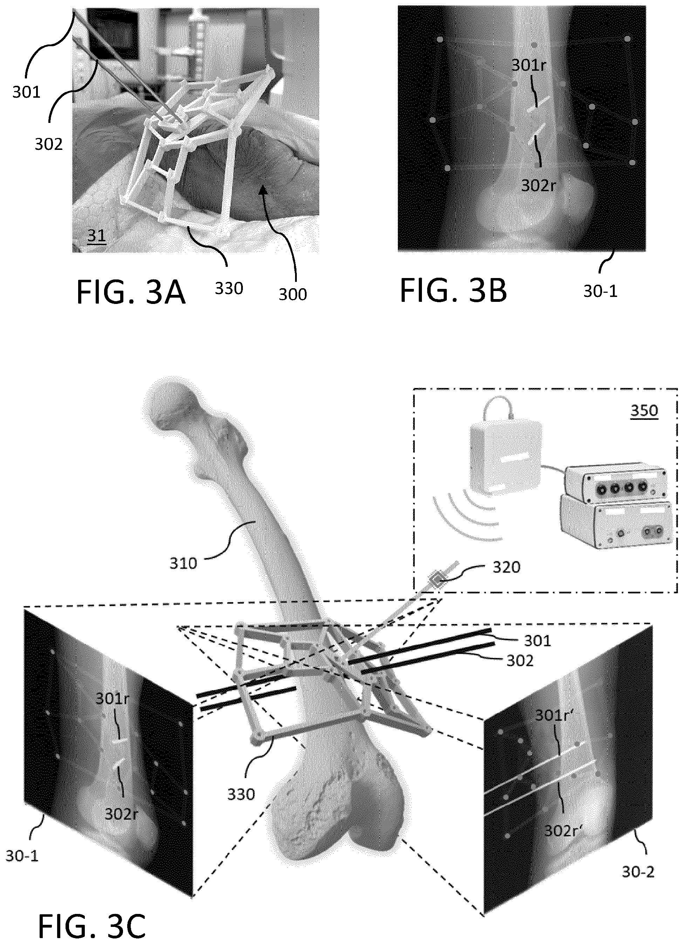

The interface is further adapted to receive 1120 at least two 2D X-ray images 20-1, 20-2 of said anatomical structure, wherein the X-ray images have been obtained under different viewing angles, and have been co-calibrated 20r. The input X-ray images 20-1, 20-2 in the example are calibrated using a fiducial marker 30, which is placed on top of the patient's leg with said femur. FIG. 3A is a photo of the patient's leg 300 and the fiducial marker 330 placed above the location of the femur. The fiducial marker 30 in the example includes little metal balls at the intersections of the geometric structure of the marker whose positions in this structure are exactly known. These metal balls are visible as round (grey) dots in the X-ray images. The calibration (or registration 20r) of the X-Ray images 20-1, 20-2 evaluates the patterns of these round dots to compute the viewing angles for the two images 20-1, 20-2 in relation to the fiducial marker. Such calibration/registration methods are well-known in the art and can also use other types of fiducial markers. The co-calibration 20r allows to describe the viewing angles for both images in a single coordinate system.

A module 110 of system 100 adapted for semantic contour extraction receives the X-ray images as input and extracts 1200 as output 20p, in each X-ray image 20-1p, 20-2p, the sub-structure contours 20-1c1, 20-1c2, 20-1c3, 20-2c1, 20-2c2, 20-2c3 of respective anatomical sub-structures. In one embodiment, module 110 may be implemented as a semantic segmentation neural network SNN being a U-Net-based model fine-tuned on synthetic patient-specific data. For example, the model may be trained using a large generic dataset as pre-training or a pretrained foundational deep-learning model. This model is then fine-tuned on a synthetically generated patient specific dataset. This fine-tuning dataset can be created using, for example, preoperative CT scans and extracting digitally reconstructed radiographs (DRRs) (cf., Sherouse, G.W., Novins, K., Chaney, E.L.: Computation of digitally reconstructed radiographs for use in radiotherapy treatment design. International Journal of Radiation Oncology*Biology*Physics 18(3), 651-658 (1990) https://doi.org/10.359 1016/0360-3016(90)90074-t) from it. Simultaneously, the semantic contour masks are created and a model is then trained on this data. The module 110 for semantic contour extraction can also be used to extract occluding contours 20-1c2, 20-1c3, 20-2c2, 20-2c3 of the femur substructures, specifically the diaphysis and condyles.

The herein disclosed contour-based registration method achieves accurate 2D/3D matches between the X-ray images and the CT model using component-level contours of the anatomical substructures instead of object-level ones. Although X-ray images are transparent, for the sake of clarity, the femur is assumed to be an opaque object and a focus is put specifically on its occluding contours, which appear in the X-ray images as sudden changes in tissue density.

In an example embodiment, the nnU-Net framework is employed for implementing SNN 110, enhanced with Skeleton Loss, to automatically and accurately segment the occluding contours of the diaphysis 20-1c1, 20-2c1and condyles 20-1c2, 20-1c3, 20-2c2, 20-2c3 in the X-ray images 20-1p, 20-2p. As mentioned earlier, nnU-Net is a self-configuring deep learning framework that automatically adapts its architecture and training parameters to the dataset. nnU-Net introduces key improvements, including dynamic adaptation of layers, feature maps, and hyperparameters to fit the input data. Skeleton Loss encourages the network to generate segmentation outputs with thin, connected structures corresponding to the object skeletons (the contours), marking state-of-the-art performance for thin structure segmentation. The total loss used for training, denoted Lₜₒₜₐₗ, is a weighted sum of the segmentation loss, denoted L_{seg}, and the Skeleton Loss Lₛₖₑₗ: Lₜₒₜₐₗ = L_{seg} + *λ* Lₛₖₑₗ where λ is a hyperparameter that balances the two loss terms. For the segmentation loss L_{seg}, a combination of Dice loss and cross-entropy loss can be used. The Skeleton Loss Lₛₖₑₗ is defined as per the method described in the above publication by Kirchhoff et al. Stochastic Gradient Descent (SGD) ca be employed with Nesterov momentum as the optimizer, starting with an initial learning rate of 0.005 and applying weight decay. The batch size can be automatically adjusted by nnU-Net based on available GPU memory.

In an example implementation, the SNN 110 was trained for 300 to 500 epochs for pretraining and 300 epochs for fine-tuning, with early stopping based on the validation loss values. A combination of pretraining and fine-tuning datasets was used for training SNN 110. The pretraining data include DRRs generated from 15 CT scans of knee specimens (from 15 different patients). The femur may first be segmented from each CT scan, followed by division into the lateral condyle, medial condyle, and diaphysis using a cut orthogonal to the first principal component at the center of mass, with the femoral head manually divided.

Ground truth masks can be created by projecting the contours of the 3D bone CT model 10r onto the image plane of the X-ray images 20-1p, 20-2p, resulting in a mask-DRR training pair. The projections are indicated by the dashed lines in module 120 ending at the edges of the X-ray images. In the fine-tuning step, patient-specific CT scans can be used, which is typically acquired preoperatively in clinical practice. In the example implementation, first, approximately 800 DRRs and corresponding masks were generated per specimen, covering angles from -90° to +90° relative to the ventral position, ensuring broad coverage for model fine-tuning. Data augmentation was used to improve the model's performance and reduce the domain gap between DRRs and real X-ray images.

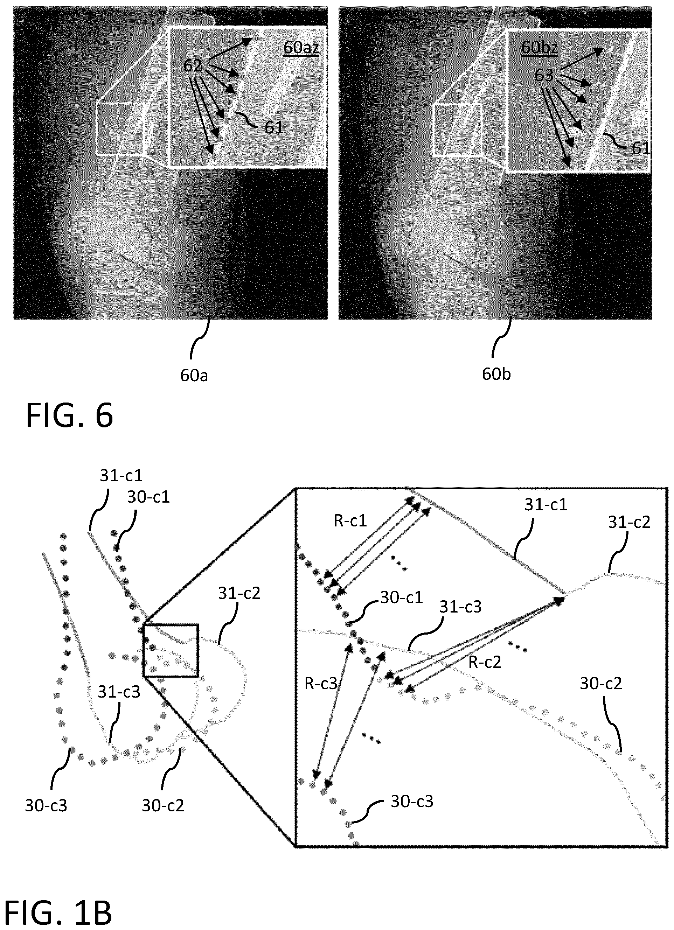

The X-ray/CT registration is then solved by applying an ICP optimization by an optimization module (ICPO) 120 adapted to apply 1300 iterative contour-based ICP optimization to contours of the reprojected sliced CT model and the extracted sub-structure contours until a convergence criterion C1 is fulfilled. Thereby, ICPO 120 computes a transformation minimizing the sum of reprojection errors between extracted bone contour points and a closest imaged vertex on the contours of the reprojected sliced bone model, and updates 2D-X-ray to 3D-CT correspondences for each anatomical sub-structure. This results in a registered CT model 10r. Thereby, in general, a 3D point is projected on an X-ray image (2D image plane) using the pinhole camera model. The information required to perform this projection is the calibration matrix of the X-ray image (one matrix per X-ray image, obtained from the co-calibration step) and the 3D point expressed in the X-ray image. The latter is obtained by transferring a 3D point from the CT model to a calibration phantom frame (e.g., the fiducial marker), and from the phantom frame to the X-ray image (the latter delivered by the co-calibration). FIG. 1B illustrates reprojection errors between extracted bone contour points and a closest imaged vertex on the contours of the associated CT model. On the left-hand side of FIG. 1B, the extracted bone contours 31-c1, 31-c2, 3-c3 of the respective anatomical substructures are illustrated as solid lines in different gray colors. The contours 30-c1, 30-c2, 30-c3 of the reprojected anatomical substructures are shown as dotted lines in respective gray colors. On the right-hand side of FIG. 1B, a zoomed square portion shows an enlarged image of the little square area on the left-hand side of the figure. The double arrows R-c1, R-c2, R-c3 illustrate reprojection errors between particular extracted bone contour points and their respective closest imaged vertices on the contours of the anatomical substructures of the reprojected CT bone model.

The convergence criterion is checked 1310 by a respective check function 121 of ICPO 120. The convergence check module 121 can test the convergence criterion whether correspondences are no longer updated. In other words, the convergence criterion is fulfilled when no changes of the correspondences occur anymore.

If a failed convergence is found a reinitialization can be done. This may be the case if the mean reprojection errors are above an expected error size (predefined threshold. e.g., greater than 1 mm or another appropriate value selected by a person skilled in the art).

The problem is stated as a non-linear least squares optimization problem whose solution is written as: $arg {min}_{\left\{{P}_{c}\right\}} {\sum }_{j} {\sum }_{i} {\left‖π\left({P}_{c}, {X}_{i}, {K}_{c}\right)-{x}_{j , i}\right‖}_{2}^{2}$ where P_{c} are the X-ray image poses parameters (parametrizing the rotation and translation), K_{c} the intrinsics (known from solving the Perspective-n-Point (PnP) problem using the fiducial marker) of the X-ray device, Xᵢ the 3D points of the bone substructure i ∈ l, x_{j,i} the 2D contour points of bone substructure i respectively, and π the projection function describing the mathematical relationship between the coordinates of a point in three-dimensional space and its projection onto the image plane of an ideal pinhole camera. The optimization can be carried out using the Levenberg-Marquardt algorithm. Once the optimal transformation is found for the current 2D/3D correspondences, the correspondences for the three substructures of the bone are updated, and a next iteration in the ICP begins (a next run of the Levenberg-Marquardt algorithm), and new correspondences are determined in in this next iteration, that is, the optimization runs with these new correspondences. An advantage of the herein disclosed method is that, unlike intensity-based methods, the residual error is interpretable, providing a clear indication of the registration quality. This allows verification of the registration accuracy.

Once the ICP has converged, that is, when the correspondences are no longer updated (i.e., the correspondences do not change anymore), in an optional embodiment, correspondence reweighting can be applied 1400 based on the associated residuals and run the optimization a second time. For this purpose, optional weighting module 130 can apply correspondence reweighting based on associated residuals to discard contour points associated with reprojection errors above a predefined threshold once the convergence criterion C1 is fulfilled (Y), and initiate repeating the ICP optimization by ICPO 120. In other words, the proposed reweighting discards points associated with large reprojection errors, e.g., resulting from noise or false contour extractions (double standard deviation of residuals). This has shown non-negligible gains in the final registration accuracy of the finally registered sliced bone model 10r.

System 100 may further include a rendering module 140 which can render the registered 3D CT model of the anatomical structure and provide the rendering result 140o as a visual output to a user.

In one embodiment, a computer program product has computer readable instructions which are adapted to implement the functional modules 110, 120 (and optionally 130) of system 100 so that the system can perform method 1000 when loading the computer program product into a respective memory and executing said instructions by one or more respective processors. For executing the steps performed by SNN 110, advantageously a GPU or a TPU may be used.

Evaluation metrics were used to verify the high registration accuracy achieved by the herein disclosed registration method. The mean Reprojection Distance (mRPD) (cf. Kraats et al.: Standardized evaluation of 2d-3d registration. In: Barillot et al. Medical Image Computing and Computer-Assisted Intervention - MICCAI 2004, pp. 574-581. Springer, Berlin, Heidelberg (2004)) as evaluation metric, following the approach disclosed in Jaganathan et al: Self-Supervised 2D/3D Registration for X-Ray to CT Image Fusion (2022). https://arxiv.org/abs/2210.07611, and Jaganathan et al: Deep Iterative 2D/3D Registration, pp. 383-392. Springer, (2021). https://doi.org/10.1007/978-3-030-87202-1 37. http://dx.doi.org/10.1007/978-3-030-87202-137.

mRPD represents the mean Euclidean distance between imaged 3D points and their corresponding observed 2D points in a control view, typically measured in millimeters. For a set of 3D points ${\left\{{X}_{i}\right\}}_{i = 1}^{N}$ and their images ${\left\{{x}_{i}\right\}}_{i = 1}^{N}$ and the control view pose P, the mRPD is defined as: $mRPD = \frac{1}{N} {\sum }_{i = 1}^{N} {\left‖{x}_{i}-π\left({X}_{i}; P\right)\right‖}_{2}$ where π(·;P) is the projection function of the pinhole camera model, mapping the 3D point Xᵢ into the control view space, and ∥ · ∥2 denotes the Euclidean norm. This metric is widely used in X-ray/CT registration. In experiments, the mRPD was calculated by comparing the ground truth control view bone contour, which was segmented by expert clinicians, with the reprojected bone contour after registration. Contours of bone substructures were not used in the calculation of the mRPD.

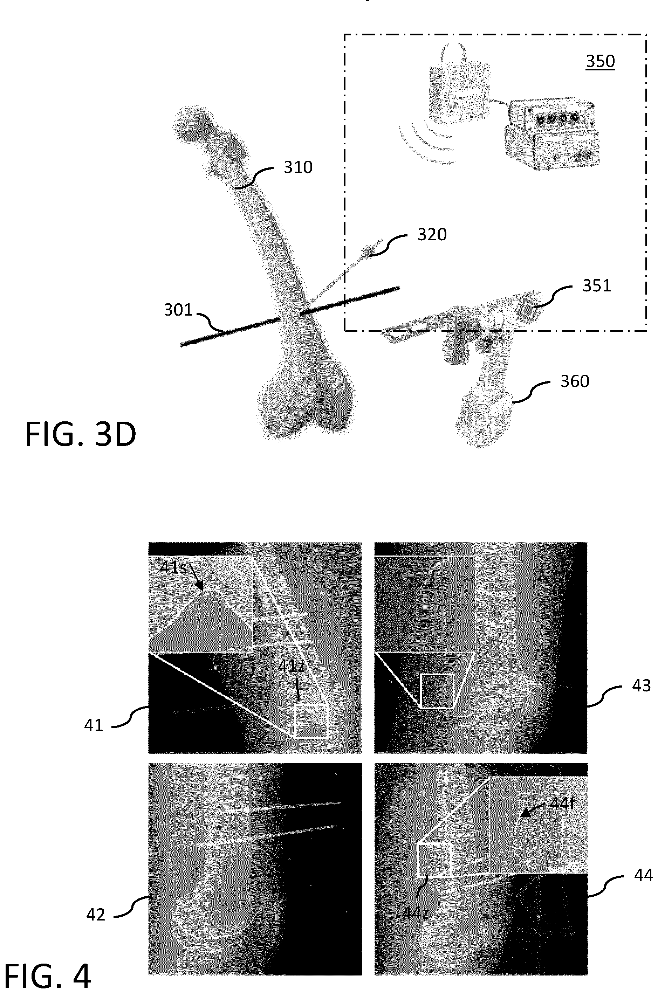

FIG. 4 illustrates examples of bone contour extractions as achieved by using the herein disclosed thin structure segmentation method. SNN 110 accurately segments the contours of the bone substructures while distinguishing the medial condyle from the lateral, even under challenging viewpoints, as shown in the top right image. Some images with strong noise can lead to false extractions as seen in the rightmost image.

The contour extraction of the herein disclosed registration method prefers precise location of the extracted contours over contour completeness. For this reason, the one-sided Chamfer distance has been used to evaluate the contour segmentation method applied by module 110. However, it is to be noted that the completeness of the extracted contours is assessed through the registration accuracy itself. Indeed, the absence or a low number of extractions results in imprecise registrations. Ground truth contours, manually annotated by medical experts, serve as benchmark for the model's performance. Comparing the extracted contours to the ground truth, a one-sided Chamfer distance of 0.59mm a mean recall of 0.80 and a mean precision of 0.74 at a distance threshold of 1mm, from ground truth to extracted bone contours was achieved.

With regard to the 2D/3D registration, an evaluation of multiple registration strategies was performed. The commercial intensity-based method, ImFusion Image Registration (available from ImFusion GmbH, Agnes-Pockels-Bogen 1, 80992 München, Germany), was tested in two configurations: ImFusion[0] without manual initialization and ImFusion[1] with manual initialization. In the latter, four corresponding points were manually marked in both X-ray images and the CT model using the ImFusion software. The evaluation further included a related ICP and contour-based approach disclosed by Zhang et al in "An automatic icp-based 2d-3d registration method for a high-speed biplanar videoradiography imaging system." ISPRS - International Archives of the Photogrammetry, Remote Sensing and Spatial Information Sciences XLIII-B2-2020, 805-812 (2020) https://doi.org/10.5194/isprs-archives-XLIII-B2-2020-805-2020, with improvements by replacing Canny edge detection with a deep-learning-based edge detection method (cf. Jaganathan, S., Kukla, M., Wang, J., Shetty, K., Maier, A.: Self-Supervised 2D/3D Registration for X-Ray to CT Image Fusion (2022). https://arxiv.org/abs/2210.07611) in Zhang's method. This method utilizes the bone outline, without any semantic substructures, during optimization.

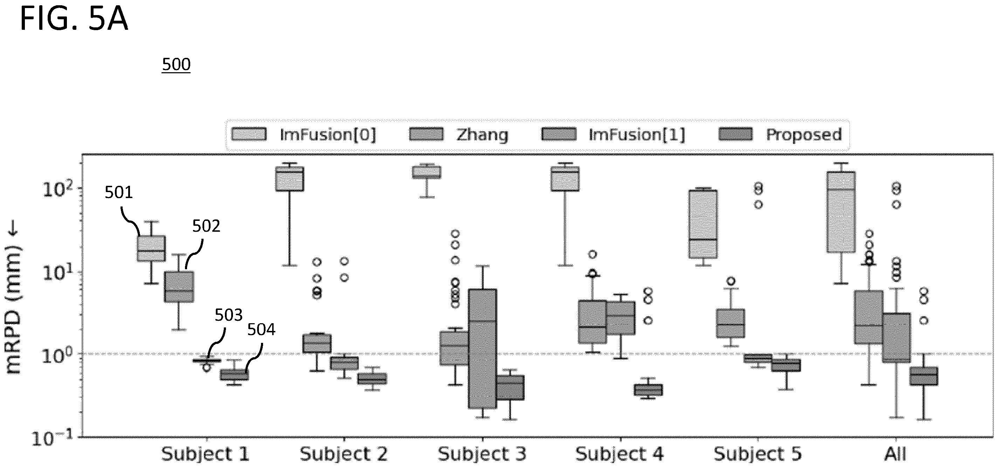

FIG. 5A summarizes the registration errors on the real-world dataset used for the evaluation. For each registration, two views were used with a perspective change of at least 45 degrees. Since the herein disclosed method does not require initialization, fixed values were set for all experiments, i.e., translations of +30mm, -40mm, +5mm and Euler angles of - 17.18°, 0°, 17.18°. A total of 30 runs are presented for each method. mRPD was used as evaluation metric. The evaluation setup consisted of 3 control views, separated by 9° each situated in between the two X-ray images used for registration. The claimed method achieved an mRPD of 0.67mm, compared to 5.35mm for the commercial methods and 4.03mm for Zhang's method. In some cases, the claimed method exhibits outliers due to noisy contour extraction. For such cases, the failing registration can be detected during the optimization by checking the convergence of the reprojection error. This allows to alleviate such failed registrations by reinitializing the registration and repeating the optimization.

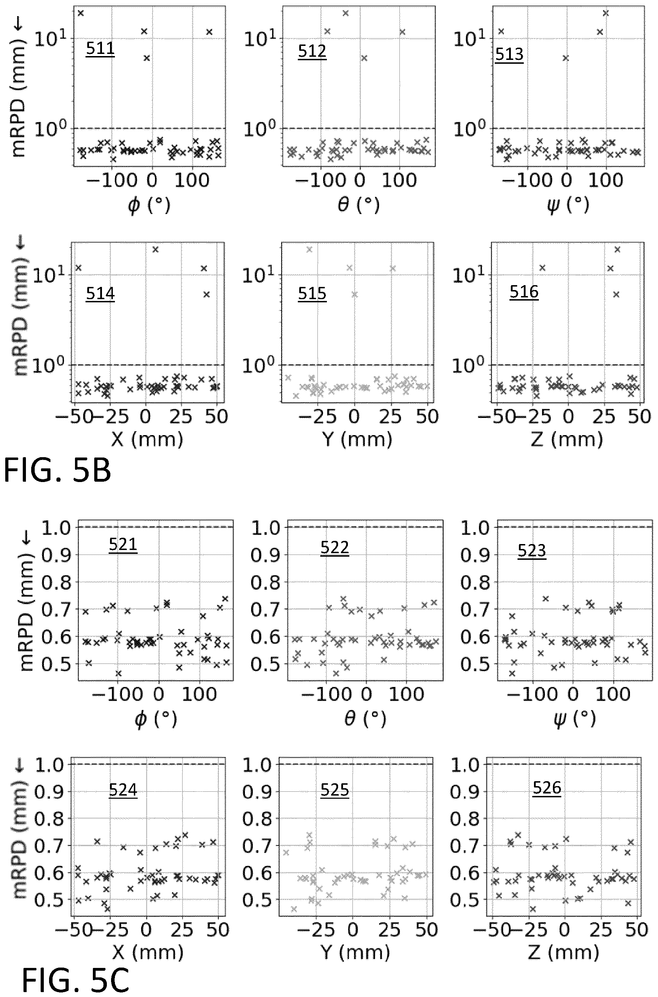

According to the American Association of Physicists in Medicine (AAPM) guidelines (cf., Brock et al.: Use of image registration and fusion algorithms and techniques in radiotherapy: Report of the aapm radiation therapy committee task group no. 132. Medical physics 44 (2017) https://doi.org/10.1002/mp.12256), a registration is defined as successful if the mRPD ≤ 1 mm. FIG. 5 is a chart 500 illustrating the success rates (registration accuracy) for the evaluated ImFusion[0] 501, Zhang 502, ImFusion[1] 503 methods and claimed (proposed) method 504 for 5 different subjects (5 different leg specimen). Thereby, the evaluations relate to registrations with the respective methods using all the same femur dataset. The average for all subjects (at the right hand of the FIG. 4 results) shows that the claimed method provided the most successful registration results of all evaluated methods. The claimed method achieved a success rate of 96.1%, which is significantly higher than the 87.1% success rate of the commercial solution. Zhang's contour-based method showed much lower performance, with a success rate of only 13.37%.

To assess robustness of the claimed method, 50 scenes present in the femur dataset were registered. The method was randomly initialized within a range of -50mm to +50mm in each of the (x, y, z) directions, along with a random initial rotation of -180° to +180° for each of the Euler angles (ϕ, θ, ψ) relative to the registered position.

FIG. 5B illustrates the mean reprojection error mRPD for 50 data points with regard to the orientation (Euler angles ϕ, θ, ψ) in charts 511 to 513, and with regard to the position (x, y, z) in charts 514 to 516 for a randomly initialized run. The x-axis in each chart indicates the initial perturbation of the corresponding parameter. It can be seen that in each chart only four data points are above an mRPD value of 1 mm, which demonstrates already a high degree of robustness of the herein disclosed multi-view registration approach.

FIG. 5C illustrates mRDP values obtained for a further improved embodiment. For this improved embodiment, all 50 data points are below an mRPD value of 1 mm. The further improved embodiment achieved a 100% success rate with a maximum mRPD of 0.75 mm. The interpretability of the residual error in the proposed ICP optimization can be leveraged to detect registration failures, therefore allowing for an automatic restart of the optimization in case of a registration failure (e.g., the four data points in FIG. 5B being above a predefined threshold).

In this further improved embodiment, the following algorithm was used:
If no correspondences are updated or after the first four correspondence updates in the ICP optimization, the median reprojection error remains higher than a predefined threshold (in an example implementation empirically set to 3mm), the ICP optimization is restarted. This restart involves applying a random perturbation, selected within the range [90°, 270°], to the previous value of the ψ parameter, which represents a rotation around the diaphysis's main axis. In the example implementation, the system randomly initialized 50 registrations across all subjects, the few runs that previously ended in a local minimum (cf. FIG. 5B) now also converge (cf. FIG. 5C). The example implementation achieved a 100% success rate, with random initialization from -180° to +180° for each Euler angle. The results show an average mRPD of 0.59 mm, with a maximum of 0.75 mm and a standard deviation of 0.07 mm. Only 4 out of 50 runs (the outliers in FIG. 5B) required a restart.

The claimed method consistently achieves submillimeter accuracy in the registration results. FIG. 6 shows control views 60a, 60b used for evaluation, with the ground truth contour as the bright line 61, and reprojected points 62, 63 from the decimated, registered bone mesh as grey dots. The reprojected points 62 in control view 60a were computed by the claimed method and are exactly in line with the ground truth 61 as clearly visible in the zoom section 60az, whereas the reprojected points 63 were computed using the ImFusion[1] model and show a significant deviation from the ground truth 61 in zoom section 60bz.

The benefit of the use of substructure contours in the ICP optimization is significant when, for example, compared to the object-level contours in Zhang's method, as demonstrated in FIG. 5. Zhang's method, which does not incorporate substructures, is more prone to getting trapped in local minima, as shown by the larger errors in the figure compared to the claimed method. That is, there is a substantial positive impact on the accuracy of the registration when also taking into account occluding contours. FIG. 4 illustrates some example results of extracted contours obtained by thin structure segmentation. In example 41, the contour separation between the lateral and medial condyles is clearly identified in the zoom section 41z. The arrow 41s indicates where the contour color for the medial condyle ends and the contour color for the lateral condyle starts (in the black and white color view both contour colors look very similar). Examples 42 and 43 nicely demonstrate that SNN 110 accurately segments the contours of the bone substructures while distinguishing the medial condyle from the lateral, even under challenging viewpoints as in example 43. Example 44 is an image with strong noise in zoom section 44z leading to false extractions 44f.

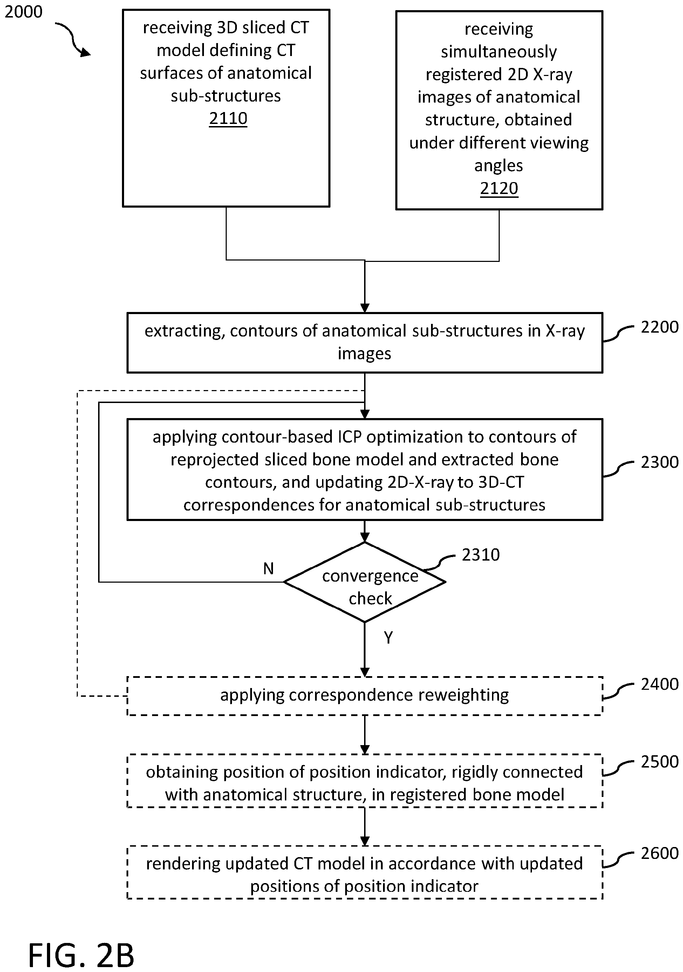

FIG. 2B is a flow chart 2000 illustrating additional functions which may be implemented by the computer program product. The blocks 2110 to 2400 correspond to the blocks 1110 to 1400 of the computer-implemented method 1000 which describe the 2D/3D registration method for a patient in a preoperative phase. The computer program, when loaded into a memory of system 100, and executed by one or more processors of the system, can also support the medical staff during a subsequent surgery of the patient by providing the further functional blocks 2500, 2600.

In these optional embodiments of the computer program and computer system 100, as illustrated in FIGs. 3B, 3C, each X-ray image 30-1, 30-2 further includes one or more representations 301r, 302r, 301r', 302r' of one or more static K-wires. The photo 31 of FIG. 3A shows two K-wires 301, 302 being rigidly connected with the patient's femur (said anatomical structure). The photo provides a view on the patient's leg 300 with a fiducial marker (calibration object 330) being placed on top of the leg 300 at a position where the patient's femur is located underneath the fiducial marker 330. The calibration object is also rigidly connected with the K-wires. It can be seen that the K-wires intrude the patient's leg. They are actually drilled into the patient's femur. Further, a position and orientation indicator 320 (schematically shown in FIG. 3C), is rigidly connected with the calibration object 330. This calibration object has been used for co-calibrating the at least two two-dimensional X-ray images 30-1, 30-2 such that the position of the position and orientation indicator 320 is also known in the registered CT model 310. In the example of FIG. 3C, the position and orientation indicator 320 is an EMT sensor which is trackable with an EMT system 350 which is communicatively coupled with computer system 100. A person skilled in the art can also use other tracking systems, such as an optical tracking system, in which case the position and orientation indicator can be implemented by an optical indicator which is trackable with optical sensors of the optical tracking system. In this embodiment, system 100 is adapted to perform the X-ray/CT registration once the K-wires are rigidly connected with the patient's anatomical structure, and the K-wires are rigidly connected with the EMT sensor. However, there is no need that the CT model includes the K-wires. The fixation is not limited to K-wires and but can be any static fixation, such as a bone plate fixated with screws, a rigid external frame attached with pins or half-pins, a metal rod inserted into the bone medullary cavity, specialized clamps (can be combined with cerclage wiring, patient-specific guides.

EMT systems and optical tracking systems for support of medical staff during surgery are known in the art. However, the herein disclosed computer system allows to track the patient's anatomical structure (and substructures) with high accuracy during surgery which becomes very relevant in situations where, for example, the patient has suffered from a trauma and bone fragments of the patient need to be rearranged during the surgery to their original positions (before the trauma). The computer system 100 may further include a tracking module 150 adapted to obtain 2500 positions and orientation of the position and orientation indicator 320 from the EMT system 350 while the anatomical structure of the patient moves (e.g., while bone parts are rearranged). The corresponding updated CT model can then be rendered 2600 by rendering module 140 in accordance with the respective position of the EMT sensor. The current position of the sensor can be used to compute the current position of the anatomical structure because of the rigid connection between sensor and anatomical structure.

The integration of the herein disclosed multi-view image 2D/3D registration approach with an EMT system of this optional embodiment provides a powerful tool for intraoperative guidance and navigation. For example, for doing an osteotomy of the distal Femur, system 100 works by semantically segmenting the Femur contours, including the occluding contours of the two condyles in the intraoperative X-rays (i.e., during surgery). As discussed earlier, the corresponding different labels include the diaphysis, the medial and lateral condyles. Then the contours are extracted as disclose above. When combining the registration algorithm with the EMT system (EMT), the clinical utility of system 100 is enhanced.

FIG. 3D shows an example of attaching sensors to surgical instruments in addition to a sensor 320 connected with a static K-wire 301 on the bone represented by registered CT model 310. In the example, EMT sensor 351 is attached to a bone saw 360. The EMT sensors 320, 351 are components of the EMT system 350 whose positions can be tracked in real time. This enables markerless surgical navigation, providing surgeons with a practical approach and valuable information for precise guidance and intervention.

In one implementation, the open-source methods DiffDRR and XReg have shown to offer registration performances of prior art approaches. The initial pose for both xReg and DiffDRR was set to a posteroanterior (PA) position. xReg employs a multi-stage optimization process that doesn't rely on gradients, utilizing a normalized cross-correlation (NCC) similarity metric based on image gradient patches. In the broader sense, the herein disclosed method can also be seen as feature-based, as the points sampled from the contours could be interpreted as landmarks. The methods that have been shown to perform best in this category are two Perspective-n-Point (PNP)-based methods.

The PnP method involves training a U-Net to detect landmarks in 2D X-rays using a leave-one-subject-out strategy. These landmarks are then used with a PnP solver to estimate the camera pose. However, this approach can be unreliable, especially when fewer than four landmarks are extracted in the 2D image. To address this limitation, a more robust method called PnP-Regularizer was developed. This approach uses the detected landmarks to create a Regularizer for potential camera poses, effectively optimizing the estimated mean Target Registration Error (mTRE). By doing so, the PnP-Regularizer method generally achieves more consistent and accurate results compared to the basic PnP approach.

Current state of the art methods either use the entire bone contour for registration or just points. By using anatomical substructure segmentation, the prior art methods are improved and add occluding contours to the registration. Advantageously, offering a superior convexity in the solution space, the claimed method offers no local minima, but one unique global minimum, whereas current prior art methods suffer from local minima. Furthermore, the integration with an EMT system allows markerless tracking. Prior art methods in the field of surgical navigation systems typically relying on visual/optical trackers. This can be cumbersome for the surgeon as the trackers have to be visible to cameras. The claimed method has been proven to offer a surgically valuable registration accuracy on synthetic and cadaveric data. Cadaveric experiments with real-world CT scans real X-ray data have been performed and prove that the claimed method offers submillimeter accuracy.

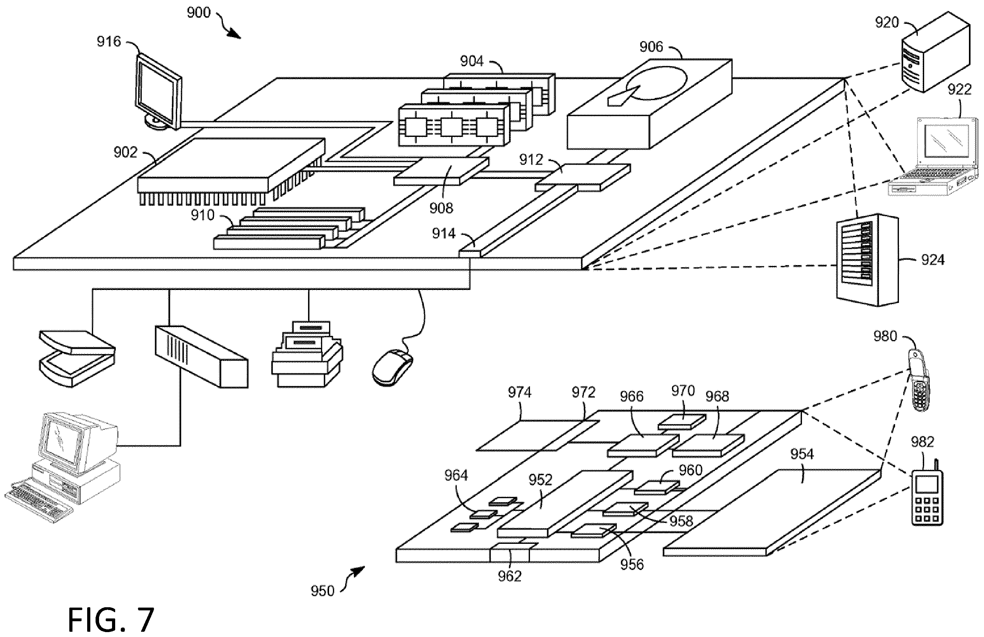

FIG. 7 is a diagram that shows an example of a generic computer device 900 and a generic mobile computer device 950, which may be used with the techniques described here. Computing device 900 relates in an exemplary embodiment to the system 100 (cf. FIG. 1A). Advantageously, computer device further uses a GPU/TPU for running SNN 110. Computing device 950 is intended to represent various forms of mobile devices, such as personal digital assistants, cellular telephones, smart phones, and other similar computing devices. In an exemplary embodiment of this disclosure, the computing device 950 may serve as a frontend control device of the system 900 which can be used by the user to interact with system 100 (e.g., for viewing the rendering results 140o (cf. FIG. 1A). The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low-speed interface 912 connecting to low-speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high-speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high-speed controller 908 manages bandwidth-intensive operations for the computing device 900, while the low-speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, ZigBee, WLAN, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provided in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, ZigBee or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems.

## Claims

1. A computer-implemented method (1000) for multi-view image registration between X-ray images and CT scans, comprising:
Receiving (1110) a 3D sliced CT model (10), obtained from the CT scans (10s), representing a preoperative anatomical structure of a patient, wherein the sliced CT model (10) comprises a 3D mesh with edges and vertices defining surfaces (10-c1, 10-c2, 10-c3) of a plurality of anatomical sub-structures (10-1, 10-2, 10-3) of said anatomical structure;
Receiving (1120) at least two 2D X-ray images (20-1, 20-2) of said anatomical structure, wherein the X-ray images are obtained under different viewing angles, and are co-calibrated (20r);
Extracting (1200), in each X-ray image (20-1p, 20-2p), sub-structure contours (20-1c1, 20-1c2, 20-1c3, 20-2c1, 20-2c2, 20-2c3) of respective anatomical sub-structures by applying to the respective X-ray images (20-1, 20-2) a semantic contour segmentation method; and
Applying (1300) iterative contour-based ICP optimization to contours of a reprojection of the sliced CT model and the extracted sub-structure contours until a convergence criterion (C1) is fulfilled, by computing, at each iteration, a transformation minimizing the sum of reprojection errors between extracted sub-structure contour points and a closest imaged vertex on the contours of the reprojection, and updating 2D-X-ray to 3D-CT correspondences for each anatomical sub-structure, resulting in a registered CT model (10r).

2. The method of claim 1, further comprising:
Once the convergence criterion (C1) is fulfilled in that the correspondences are no longer changed, applying (1400) correspondence reweighting based on associated residuals to discard contour points associated with reprojection errors above a predefined threshold; and
Repeating the ICP optimization step (1300).

3. The method of claim 2, further comprising:
Reinitializing the ICP optimization if a failing of the multi-view image registration is detected and the mean reprojection error is above a predefined threshold.

4. The method of any of the previous claims, wherein the at least two X-ray images are co-calibrated with each other using a calibration method selected from any of: calibration with respective fiducial marker (30), landmark calibration, and deep-learning based calibration.

5. The method of any of the previous claims, wherein the semantic contour segmentation method (110) is implemented using a segmentation neural network, enhanced with a thin structure preserving loss function and trained for thin structure segmentation.

6. A computer program product (2000) comprising computer readable instructions which, when loaded into a memory of a computer system and executed by one or more processors of the computer system, cause the computer system to perform the following steps:
Receiving (2110) a 3D sliced CT model (10), obtained from the CT scans, representing a preoperative anatomical structure of a patient, wherein the sliced CT model (10) comprises a 3D mesh with edges and vertices defining surfaces (10-c1, 10-c2, 10-c3) of a plurality of anatomical sub-structures (10-1, 10-2, 10-3) of said anatomical structure;
Receiving (2120) at least two 2D X-ray images (20-1, 20-2) of said anatomical structure, wherein the X-ray images are obtained under different viewing angles, and are co-calibrated (20r);
Extracting (2200), in each X-ray image (20-1p, 20-2p), sub-structure contours (20-1c1, 20-1c2, 20-1c3, 20-2c1, 20-2c2, 20-2c3) of respective anatomical sub-structures by applying to the respective X-ray images (20-1, 20-2) a semantic contour segmentation method (110); and
Applying (2300) iterative contour-based ICP optimization to contours of a reprojection of the sliced CT model and the extracted sub-structure contours until a convergence criterion (C1) is fulfilled, by computing, at each iteration, a transformation minimizing the sum of reprojection errors between extracted sub-structure contour points and a closest imaged vertex on the contours of the reprojection, and updating 2D-X-ray to 3D-CT correspondences for each anatomical sub-structure, resulting in a registered CT model (10r).

7. The computer program product of claim 6, comprising further instructions to perform:
Once the convergence criterion (C1) is fulfilled, applying (2400) correspondence reweighting based on associated residuals to discard contour points associated with reprojection errors above a predefined threshold; and
Repeating the ICP optimization step (2300).

8. The computer program product of claim 6 or 7, wherein each X-ray image (30-1, 30-2) further includes a representation (301r, 302r, 301r', 302r') of a static K-wire (301, 302), the K-wire being rigidly connected with said anatomical structure and with a position and orientation indicator (320), the position and orientation indicator further being rigidly connected with a calibration object (330) used for co-calibrating the at least two two-dimensional X-ray images (30-1, 30-2) such that the position and orientation of the position and orientation indicator is known in the coordinate system of the registered CT model (310).

9. The computer program product of claim 8, wherein the position and orientation indicator (320) is an EMT sensor which is trackable with an EMT system (350), or is an optical indicator which is trackable with an optical tracking system.

10. The computer program product of any of the claims 6 to 9, wherein the semantic contour segmentation method (110) is implemented using a segmentation neural network, enhanced with a thin structure preserving loss function and trained for thin structure segmentation.

11. A computer system (100) adapted for multi-view image registration between X-ray images and CT scans, comprising:
A data interface adapted to receive a 3D sliced CT model (10), obtained from the CT scans, representing a preoperative anatomical structure of a patient, wherein the sliced CT model comprises a 3D mesh with edges and vertices defining surfaces (10-c1, 10-c2, 10-c3) of a plurality of anatomical sub-structures (10-1, 10-2, 10-3) of said anatomical structure, and further adapted to receive at least two 2D X-ray images (20-1, 20-2) of said anatomical structure, wherein the X-ray images are obtained under different viewing angles, and are co-calibrated (20r);
a semantic contour segmentation method (110) adapted to extract, in each X-ray image (20-1p, 20-2p), sub-structure contours (20-1c1, 20-1c2, 20-1c3, 20-2c1, 20-2c2, 20-2c3) of respective anatomical sub-structures;
an optimization module (120) adapted to apply iterative contour-based ICP optimization to contours of a reprojection of the sliced CT model and the extracted sub-structure contours until a convergence criterion (C1) is fulfilled, by computing, at each iteration, a transformation minimizing the sum of reprojection errors between extracted sub-structure contour points and a closest imaged vertex on the contours of the reprojection, and updating 2D-X-ray to 3D-CT correspondences for each anatomical sub-structure, resulting in a registered CT model (10r).

12. The system of claim 13, further comprising:
A weighting module (130) adapted to apply correspondence reweighting based on associated residuals to discard contour points associated with reprojection errors above a predefined threshold once the convergence criterion (C1) is fulfilled (Y), and to initiate repeating the ICP optimization.

13. The system of claim 11 or 12, wherein each X-ray image (30-1, 30-2) further includes a representation (301r, 302r, 301r', 302r') of a static K-wire (301, 302), the K-wire being rigidly connected with said anatomical structure and with a position and orientation indicator (320), the position and orientation indicator further being rigidly connected with a calibration object (330) used for co-calibrating the at least two two-dimensional X-ray images such that the position and orientation of the position and orientation indicator is known in the registered sliced CT model (310).

14. The system of any of the claims 11 to 13, wherein the position and orientation indicator is an EMT sensor which is trackable with an EMT system (350), and wherein the system further comprises a tracking module adapted to obtain (2500) positions of the position and orientation indicator from the EMT system while the anatomical structure moves, and to render (2600) a corresponding updated registered CT model in accordance with a respective position.

15. The system of any of the claims 11 to 14, wherein the optimization module is further adapted to further optimize the registered sliced CT model (10r) by subsequently applying a further registration method selected from: intensity-based registration, feature-based registration, deep-learning based registration, model-based registration, or any combination thereof.
